# EUROPÄISCHE PATENTANMELDUNG

(11) **EP 1 530 356 A1**
(43) Veröffentlichungstag der Anmeldung: **11.05.2005**
(21) Anmeldenummer: 03025762.0
(22) Anmeldetag: 10.11.2003
(51) Int. Cl.: H04M 17/00, H04M 1/2745, G06F 17/60, G07F 7/08, G07F 19/00

(54) **Verfahren zum Aufladen einer Telefonkarte**

(71) Anmelder: Dumont, Peter, 80796 München (DE)
(72) Erfinder: Dumont, Peter, 80796 München (DE)
(74) Vertreter: Dendorfer, Claus, Dr.

(57) **Zusammenfassung**

Bei einem Verfahren zum Bereitstellen von Telekommunikationsleistungen wird zum Aufladen eines Benutzerkontos (32) ein bei einer ersten vorbestimmten Rufnummer (46) eingehender Telefonanruf entgegengenommen, ein zugeordnetes Benutzerkonto (32) wird durch Auswertung einer in Zusammenhang mit dem Rufaufbau übermittelten Kennzeichnung identifiziert, ein durch den Anruf übermittelter Bonuscode (36) wird ausgewertet, und der Stand der Benutzerkontos (32) wird entsprechend erhöht, wenn es sich um einen gültigen Bonuscode (36) handelt. Zur Inanspruchnahme der Telekommunikationsleistungen wird ein bei einer zweiten vorbestimmten Rufnummer (48) eingehender Telefonanruf entgegengenommen, ein zugeordnetes Benutzerkonto (32) wird durch Auswertung einer in Zusammenhang mit dem Rufaufbau übermittelten Kennzeichnung identifiziert, und der Benutzer erhält Gelegenheit zur Inanspruchnahme der Telekommunikationsleistungen, falls das Benutzerkonto (32) mindestens einen vorbestimmten Kontostand (34) aufweist, wobei das Benutzerkonto (32) entsprechend belastet wird. Eine Vorrichtung und ein Computerprogrammprodukt weisen entsprechende Merkmale auf. Die Erfindung schafft eine besonders effizient arbeitende Technik zum Bereitstellen von Telekommunikationsleistungen.

## Beschreibung

Die Erfindung betrifft allgemein das technische Gebiet der Telekommunikation und spezieller das Gebiet, Telekommunikationsleistungen für Benutzer bereitzustellen.

Aus dem US-Patent 5,983,196 ist ein System bekannt, bei dem unter anderem Telekommunikationsleistungen als Bonus oder Kaufanreiz dienen. Es werden Zertifikate mit je einer eindeutigen Zertifikatnummer verwendet. Wenn ein Benutzer eine Zertifikatnummer, die noch nicht eingelöst worden ist, in das System eingibt, dann wird eine entsprechende Anzahl von Bonuspunkten auf einem Benutzerkonto gutgeschrieben. Zum Zugriff auf das System wird der Benutzer aufgefordert, eine PIN (*personal identification number-* persönliche Identifikationsnummer), die z.B. eine zehnstellige Ziffer sein kann, einzugeben.

Die Verwendung kostenloser Telekommunikationsleistungen bei Bonussystemen ist besonders vorteilhaft, weil der Benutzer schon für relativ kleine Bonuswerte einen unmittelbar verwendbaren Vorteil erhält. Im Gegensatz zu einer Sachprämie, für die möglicherweise viele Monate lang Bonuspunkte angespart werden müssen, können einige kostenlose Telefonminuten schon für eine verhältnismäßig kleine Anschaffung vergeben werden.

Es besteht jedoch das Problem, daß wegen des geringen Werts eines einzelnen Telefonats und wegen der potenziell kleinen Stückelung der Bonuszertifikate sowohl der Vorgang des Aufladens des Benutzerkontos als auch der Vorgang der Inanspruchnahme von Bonuspunkten sehr effizient ausgestaltet sein müssen. So wäre das Bonussystem beispielsweise wenig attraktiv, wenn die Einwahl in das System Kosten für den Anwender verursachen würde. Wenn andererseits eine für den Anwender kostenlose Einwahlnummer bereitgestellt wird, ist es erforderlich, die Verbindungszeiten so kurz wie möglich zu halten, damit die Kosten für den Anbieter des Systems gering bleiben. Dies gilt insbesondere dann, wenn die für den Benutzer kostenlose Einwahl auch von Mobiltelefonen aus möglich sein soll, weil der Systembetreiber in diesem Fall besonders hohe Verbindungsentgelte entrichten muß.

Die Erfindung hat die Aufgabe, das gerade genannte Problem zu lösen und eine Technik zum Bereitstellen von Telekommunikationsleistungen zu schaffen, die besonders effizient arbeitet. Hierunter soll insbesondere verstanden werden, daß sowohl der Vorgang des Aufladens eines Benutzerkontos als auch der Vorgang des Inanspruchnehmens der Telekommunikationsleistungen besonders rasch ablaufen und nur geringen Aufwand erfordern.

Erfindungsgemäß wird diese Aufgabe durch ein Verfahren nach Anspruch 1, eine Vorrichtung nach Anspruch 9 und ein Computerprogrammprodukt nach Anspruch 10 gelöst. Die abhängigen Ansprüche betreffen bevorzugte Ausgestaltungen der Erfindung.

Die Erfindung geht von der Grundidee aus, sowohl beim Aufladen eines Benutzerkontos als auch beim Inanspruchnehmen der Telekommunikationsleistungen das jeweils angesprochene Benutzerkonto durch Auswertung einer in Zusammenhang mit dem Rufaufbau übermittelten Kennzeichnung zu identifizieren. Durch diese Maßnahme erübrigt es sich, daß der Benutzer - z.B. in Reaktion auf eine Aufforderung eines Sprachmenüsystems - eine Identifikationsnummer über die Telefontastatur eingibt. Letzteres wäre ein langsamer, umständlicher und fehleranfälliger Vorgang, der das gesamte System weniger attraktiv machen würde. Jede Einsparung an Verbindungszeit erhöht nicht nur den Komfort für den Benutzer, sondern verringert auch die Kosten für den Systembetreiber erheblich, weil erstens weniger Verbindungsentgelte anfallen und zweitens mit einer vorgegebenen Hardwarekonfiguration mehr Vorgänge bearbeitet werden können.

Erfindungsgemäß ist ferner vorgesehen, daß zum Aufladen des Benutzerkontos ein bei einer ersten vorbestimmten Rufnummer eingehender Telefonanruf entgegengenommen wird, und daß zur Inanspruchnahme der Telekommunikationsleistungen ein bei einer zweiten vorbestimmten Rufnummer eingehender Telefonanruf entgegengenommen wird. Dieses Merkmal schafft die technischen Grundlagen, um eingehende Telefonanrufe problemlos diesen beiden Funktionen zuordnen zu können, so daß auf eine explizite Abfrage - z.B. durch ein Sprachmenüsystem - verzichtet werden kann.

In bevorzugten Ausgestaltungen sind die erste und die zweite Rufnummer voneinander verschieden. Dies heißt nicht notwendigerweise, daß Anrufe zu diesen Rufnummern von einer Vermittlungsstation zu unterschiedlichen Amtsleitungen des Systems verbunden werden. Vielmehr können die Unterschiede auch darin bestehen, daß die Rufnummern eine unterschiedliche Durchwahl oder zusätzliche Ziffern aufweisen, die beim Rufaufbau als Teil der angerufenen Nummer an eine Telefonschnittstelle des erfindungsgemäßen Systems übertragen werden. In anderen Ausgestaltungen kann vorgesehen sein, daß die erste und die zweite Rufnummer übereinstimmen. Auch in solchen Ausführungsformen wird jedoch vorzugsweise eine Kennziffer, die den vom Benutzer gewünschten Vorgang angibt, unmittelbar nach dem Verbindungsaufbau übermittelt, ohne zunächst eine von einem Sprachmenüsystem ausgegebene Begrüßung oder eine sonstige Sprachansage abzuwarten.

Vorzugsweise ermöglicht die in Zusammenhang mit dem Rufaufbau übermittelte Kennzeichnung eine eindeutige Identifizierung des angesprochenen Benutzerkontos. Insbesondere kann vorgesehen sein, die Rufnummer des Anrufers an eine Telefonschnittstelle des erfindungsgemäßen Systems zu übertragen. Hierzu kann z.B. einer der unter den Namen ANI (*Automatic Number Identification*) oder CLI (*Calling Line Identification*) bekannten Dienste verwendet werden. Statt der über ANI oder CLI übermittelten Information oder zusätzlich zu diesen kann in Ausführungsalternativen ein anderer Identifikator des Anrufers und/oder ein Identifikator des anrufenden Endgeräts übermittelt und zur Zuordnung des Benutzerkontos herangezogen werden.

Eine erfindungsgemäße Möglichkeit zum Aufladen des Benutzerkontos ist das Einlösen eines Bonuscodes. Dies schließt nicht aus, daß zusätzlich andere Wege zum Aufladen des Benutzerkontos vorgesehen sein können, z.B. eine automatische Gutschrift von Bonuspunkten bei Einkäufen mit einer Kredit- oder Kundenkarte.

Das System ist vorzugsweise so eingerichtet, daß es den Bonuscode unmittelbar nach dem Rufaufbau erwartet, wobei der Bonuscode z.B. in Form von DTMF-Tönen (DTMF = *Dual Tone Multi Frequency*) übertragen wird. In Ausführungsalternativen kann der Bonuscode auch über einen digitalen Signalisierungskanal und/oder als Anhang zur angerufenen Nummer übermittelt werden. Die zur Datenübertragung erforderliche Verbindungszeit kann in allen diesen Ausgestaltungen auf ein Minimum beschränkt werden, um Verbindungskosten zu sparen und die Geräteauslastung zu verringern.

Die Bonuscodes sind in einer bevorzugten Ausgestaltung der Erfindung nur zur einmaligen Verwendung gültig. Um die mehrmalige Einlösung eines Bonuscodes zu verhindern, werden in bevorzugten Ausführungsformen die zu einem gegebenen Zeitpunkt gültigen und/oder die bereits eingelösten Bonuscodes in einer Datenbank gespeichert. Jedes Einlösen eines Bonuscodes wird dann in der Datenbank vermerkt, indem der entsprechende Eintrag verändert oder gelöscht wird. Zusätzlich können die Bonuscodes einen vorbestimmten Verfallstermin aufweisen, um die Datenbankgröße auf ein realistisches Maß zu beschränken.

In bevorzugten Ausgestaltungen sind die als Bonusleistungen angebotenen Telekommunikationsleistungen z.B. kostenlose oder verbilligte Telefonate und/oder kostenlose oder verbilligte Nachrichten und/oder kostenlose oder verbilligte Inhalte. Die Nachrichten können beispielsweise die an sich bekannten SMS- oder MMS-Nachrichten sein. Als Inhalte können z.B. Klingeltöne oder Logos zum Benutzer übertragen werden, oder der Benutzer kann die Gelegenheit erhalten, an einem interaktiven Online-Spiel teilzunehmen.

Jeder Bonuscode kann z.B. einer vorgegebenen Anzahl von Bonuspunkten entsprechen, die dann nach einem festgelegten Schlüssel - z.B. je nach dem gerufenen Land und der Geräteklasse des gerufenen Teilnehmers gestaffelt - in Form von Telefonminuten und/oder Nachrichtensendungen in Anspruch genommen werden können. In manchen Ausgestaltungen kann auch ein Zufallselement vorgesehen sein. Ein Bonuscode kann in solchen Ausgestaltungen beispielsweise, ähnlich wie ein Los, die Chance auf den "Gewinn" unterschiedlich vieler Bonuspunkte und/oder Telefonminuten und/oder Nachrichten eröffnen.

Auch bei der Inanspruchnahme der Telekommunikationsleistungen braucht der Benutzer vorzugsweise keine Menüauswahl zu treffen. Vielmehr geht in bevorzugten Ausgestaltungen die Tatsache, daß der Benutzer seine oder ihre Bonuspunkte einlösen möchte, bereits aus der gewählten zweiten Rufnummer hervor, und die Benutzeridentität ist schon im Zusammenhang mit dem Rufaufbau übertragen worden. Sobald das Benutzerkonto identifiziert und auf einen ausreichenden Guthabenstand überprüft wurde, kann daher dem Benutzer ein Freizeichen bereitgestellt werden, und der Benutzer kann die gewünschte Telefonnummer dann unmittelbar wählen. Es kann vorgesehen sein, das Freizeichen unmittelbar nach dem Rufaufbau bereitzustellen, oder der Benutzer kann vorab eine Ansage über seinen oder ihren aktuellen Kontostand erhalten.

Die vom Benutzer gewünschte Telefonnummer - oder eine andere Angabe, die die vom Benutzer gewünschte Telekommunikationsleistung betrifft - wird vorzugsweise in Form von DTMF-Wähltönen an das System übertragen. In Ausführungsalternativen kann auch eine Übertragung der Telefonnummer in Zusammenhang mit dem Aufbau des zweiten Telefonanrufs - ähnlich wie oben für die Übertragung des Bonuscodes dargestellt - vorgesehen sein.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise eine Diskette oder eine CD-ROM oder ein Halbleiterspeicher. Das Computerprogrammprodukt kann jedoch auch ein nicht-körperliches Medium sein, beispielsweise ein über ein Computernetzwerk übermitteltes Signal. Insbesondere kann das Computerprogrammprodukt zur Programmierung einer Vermittlungsanlage und/oder eines Datenbankverwaltungssystems vorgesehen sein.

In bevorzugten Ausgestaltungen sind das Computerprogrammprodukt und/oder die Vorrichtung mit Merkmalen weitergebildet, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen.
Fig. 1 zeigt ein Blockdiagramm eines Systems nach einem Ausführungsbeispiel der Erfindung,
Fig. 2 zeigt ein Ablaufdiagramm des Aufladens eines Benutzerkontos bei dem System von Fig. 1, und
Fig. 3 zeigt ein Ablaufdiagramm der Inanspruchnahme von Telekommunikationsleistungen bei dem System von Fig. 1.

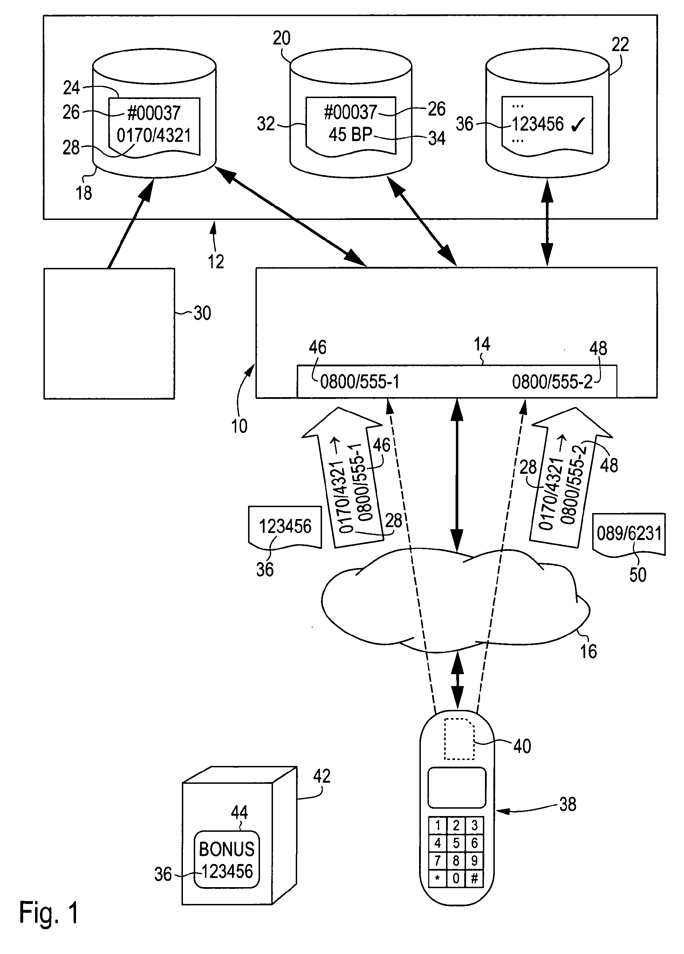

Bei dem in Fig. 1 gezeigten System zum Bereitstellen von Telekommunikationsleistungen sind als Hauptkomponenten eine Vermittlungsanlage 10 und ein Datenbankverwaltungssystem 12 vorgesehen. Die Vermittlungsanlage 10 basiert auf einer an sich bekannten Plattform für Telefonkarten (*Calling Cards*), die jedoch erheblich verändert wurde, um das erfindungsgemäße Verfahren zu ermöglichen. Die Vermittlungsanlage 10 weist diverse Hard- und Softwarekomponenten auf, insbesondere mehrere programmierbare Steuerrechner (in Fig. 1 nicht separat gezeigt) sowie eine Telefonschnittstelle 14. Über die Telefonschnittstelle 14 ist die Vermittlungsanlage 10 mit dem öffentlichen Telefonnetz 16 verbunden. Je nach der Ausbaustufe der Vermittlungsanlage 10 können Hunderte oder Tausende von Gesprächen gleichzeitig geführt werden.

Das Datenbankverwaltungssystem 12 beinhaltet im vorliegenden Ausführungsbeispiel drei Datenbanken, nämlich eine Benutzerdatenbank 18, eine Abrechnungsdatenbank 20 und eine Bonuscode-Datenbank 22.

In der Benutzerdatenbank 18 sind eine Vielzahl Benutzerdatensätze 24 gespeichert. Jeder Benutzerdatensatz 24 enthält eine eindeutige Benutzernummer 26 und mindestens eine Anrufernummer 28. Die Anrufernummer 28 dient als Kennzeichnung des Benutzers. Sie ist die Rufnummer desjenigen Telefons, das der Benutzer zur Kommunikation mit dem hier beschriebenen System verwendet. Neben den bisher erwähnten Einträgen kann ein Benutzerdatensatz 24 weitere Informationen aufweisen, beispielsweise den Namen und die Adresse des Benutzers und/oder Benutzerpräferenzen und/oder weitere Anrufernummern, die weiteren Telefonen des Benutzers - z.B. einem Festnetztelefon, wenn die erste Anrufernummer 28 die Nummer eines Mobiltelefons ist - entsprechen.

Die in der Benutzerdatenbank 18 gespeicherten Informationen wurden bei einem Anmeldevorgang vom Benutzer abgefragt und über ein Anmeldemodul 30 in die Benutzerdatenbank 18 eingegeben. Zur Anmeldung kann der Benutzer einen Fragebogen auf Papier oder in einem Internet-Browser ausfüllen oder eine telefonische Anmeldung über ein Call-Center durchführen. Die Benutzerdaten stellen einen erheblichen wirtschaftlichen Wert dar. In manchen Ausgestaltungen kann vorgesehen sein, während des Betriebs des hier beschriebenen Systems weitere Informationen über das Konsumverhalten der Benutzer zu sammeln und zu Marketingzwecken zu verwenden. Ferner kann vorgesehen sein, daß sich jeder Benutzer im Zuge des Anmeldevorgangs mit dem Erhalt von Werbebriefen oder Werbeanrufen einverstanden erklärt.

In der Abrechnungsdatenbank 20 wird für jeden angemeldeten Benutzer ein Benutzerkonto 32 geführt. Neben der Benutzernummer 26, die als Primärschlüssel dient, enthält jedes Benutzerkonto 32 den aktuellen Kontostand 34, der im vorliegenden Ausführungsbeispiel z.B. in Gestalt von Bonuspunkten ausgedrückt wird. Auch in den Benutzerkonten 32 können weitere Informationen, z.B. die oben erwähnten Marketinginformationen, gespeichert sein.

Das hier beschriebene System verwendet Bonuscodes 36, die von der Vermittlungsanlage 10 als z.B. 10- oder 14-stellige Zahlen erzeugt werden. Hierfür wird ein an sich bekannter Algorithmus verwendet, der die Bonuscodes 36 innerhalb des zur Verfügung stehenden Zahlenraums mit großen Abständen und auf eine für Dritte nicht vorhersagbare Weise erzeugt. Die Wahrscheinlichkeit, einen gültigen Bonuscode 36 durch bloßes Raten zu finden, kann dadurch vernachlässigbar klein gehalten werden. Jedem Bonuscode 36 ist eine vorgegebene Wertigkeit in Form einer bestimmten Anzahl von Bonuspunkten zugeordnet, die im vorliegenden Ausführungsbeispiel aus dem Bonuscode ableitbar ist.

Jeder Bonuscode 36 kann nur ein einziges Mal eingelöst werden. Um eine mehrfache Einlösung zu verhindern, enthält im vorliegenden Ausführungsbeispiel die Bonuscode-Datenbank 22 alle gültigen ausgegebenen Bonuscodes 36, die noch nicht eingelöst wurden. In Ausführungsalternativen kann die Bonuscode-Datenbank 22 anders organisiert sein und z.B. die bereits eingelösten Bonuscodes 36 oder alle ausgegebenen Bonuscodes 36 enthalten. Die Bonuscode-Datenbank 22 kann durch beliebige Datenstrukturen implementiert werden; beispielsweise kann vorgesehen sein, die Bonuscodes 36 durch eine *Hash*-Funktion auf ein Bitfeld abzubilden, das jedem Bonuscode 36 einen der Werte "eingelöst" und "nicht eingelöst" zuweist. Bei einer derartigen Implementierung wird vorzugsweise schon bei der Erzeugung der Bonuscodes 36 sichergestellt, daß keine zwei gültigen Bonuscodes 36 durch die *Hash*-Funktion auf ein einziges Bit des Bitfeldes abgebildet werden.

Es versteht sich, daß die in Fig. 1 gezeigte Darstellung lediglich konzeptioneller Natur ist. In einer tatsächlichen Realisierung eines "klein" ausgelegten Systems kann beispielsweise das Datenbankverwaltungssystem 12 in die Vermittlungsanlage 10 integriert sein. Andererseits kann bei einem umfangreich ausgebauten System die Vermittlungsanlage 10 mehrere externe Server und sonstige Computer aufweisen. Weitere Komponenten des Gesamtsystems, die z.B. zur Datenpflege, Datensicherung und Systemverwaltung sowie zur Kundenpflege und zum Bereitstellen einer Internet-Präsenz dienen, sind in Fig. 1 aus Gründen der Übersichtlichkeit nicht gezeigt.

Der Benutzer greift auf die von dem System bereitgestellten Telekommunikationsleistungen über ein hier als Benutzertelefon 38 bezeichnetes Endgerät zu. Das Benutzertelefon 38 ist in Fig. 1 beispielhaft als Mobiltelefon gezeigt; in Ausführungsalternativen ist das Benutzertelefon 38 jedoch als Festnetz-Telefon oder als sonstiges Telekommunikationsgerät ausgebildet. Das Benutzertelefon 38 weist auf an sich bekannte Weise ein SIM 40 (*Subscriber Identity Module*) auf, in dem die Rufnummer des Benutzers gespeichert ist. Diese Rufnummer ist als Anrufernummer 28 im Benutzerdatensatz 24 eingetragen. Die Anrufernummer 28 wird bei jedem Rufaufbau vom Benutzertelefon 38 an die Vermittlungsanlage 10 gesendet und dient als Kennzeichnung zur Identifizierung des Benutzers und des zugeordneten Benutzerkontos 32.

Ferner ist in Fig. 1 eine Warenverpackung 42 gezeigt, die einen Aufkleber 44 mit einem Bonuscode 36 trägt. Der Benutzer hat die entsprechende Ware - z.B. ein Erfrischungsgetränk - erworben und den ursprünglich durch eine undurchsichtige Schicht abgedeckten Bonuscode 36 auf dem Aufkleber 44 freigerubbelt. In Ausführungsalternativen kann der Benutzer den Bonuscode 36 statt auf dem Aufkleber 44 auch auf einer Rubbelkarte - die dem Benutzer z.B. beim Bezahlen von Waren überreicht worden ist - oder auf einer in der Warenverpackung 42 befindlichen Marke - z.B. einer innen in einem Getränkeverschluß integrierten Marke - erhalten haben. Ferner können Bonuscodes 36 über das Internet - z.B. als "Belohnung" für das Ausfüllen eines Fragebogens in einem Internet-Browser - oder auf dem Postweg - z.B. aufgedruckt auf einen Kreditkarten-Kontoauszug oder eine Werbesendung - vergeben werden.

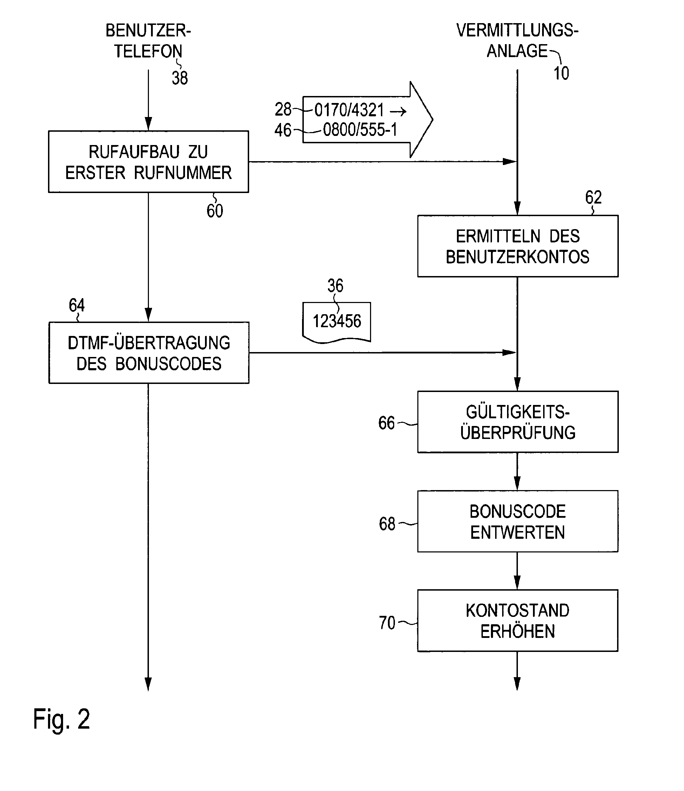

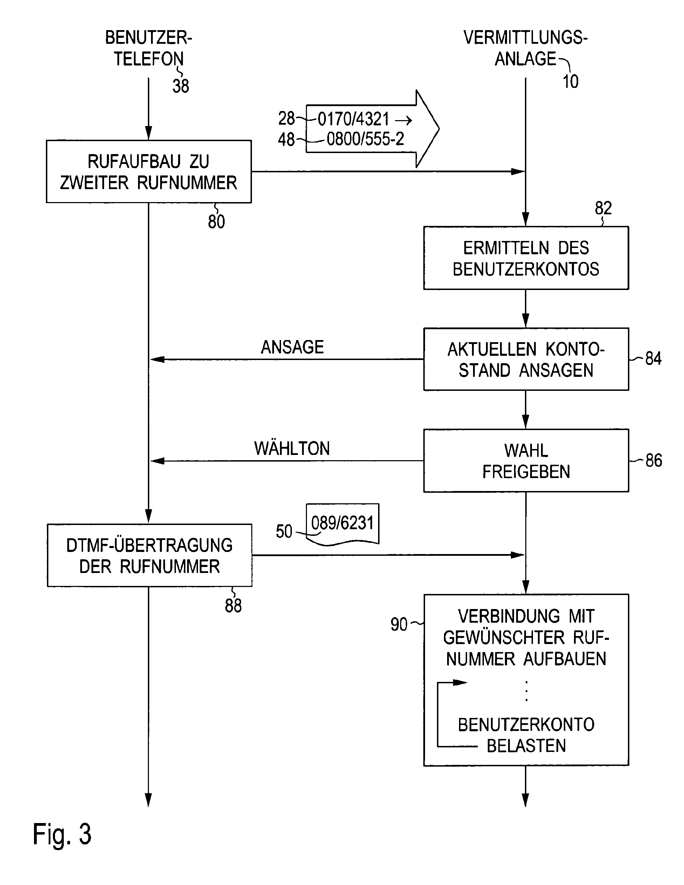

In Fig. 1 ist durch einen ersten gestrichelten Pfeil ein Vorgang angedeutet, bei dem der Benutzer über das Benutzertelefon 38 eine erste Rufnummer 46 des Systems wählt, um nach dem Rufaufbau den Bonuscode 36 an die Vermittlungsanlage 10 zu übertragen und eine entsprechende Anzahl von Bonuspunkten auf dem Benutzerkonto 32 gutschreiben zu lassen. Durch einen zweiten gestrichelten Pfeil ist ein Vorgang angedeutet, bei dem der Benutzer Telekommunikationsleistungen in Anspruch nimmt, indem er oder sie eine zweite Rufnummer 48 des Systems anruft nach dem Herstellen der Verbindung eine Telefonnummer 50 des gewünschten Gesprächspartners eingibt. Die an die Rufnummern 46, 48 gerichteten Anrufe sind im hier beschriebenen Ausführungsbeispiel für den Benutzer kostenlos. Die beiden gerade kurz umrissenen Vorgänge werden im folgenden anhand von Fig. 2 und Fig. 3 eingehend beschrieben.

Fig. 2 zeigt einen beispielhaften Verfahrensablauf, bei dem ein Benutzerkonto 32 erfolgreich aufgeladen wird. Der Benutzer ruft dazu von seinem Benutzertelefon 38 die erste Rufnummer 46 der Vermittlungsanlage 10 an. Beim Rufaufbau in Schritt 60 wird im Zuge der ANI/CLI-Funktionalität des Telefonnetzes 16 unter anderem die Anrufernummer 28 an die Telefonschnittstelle 14 übertragen. Seitens der Vermittlungsanlage 10 wird diese Anrufernummer 28 ausgewertet, um in Schritt 62 zunächst den die Anrufernummer 28 enthaltenden Benutzerdatensatz 24 und dann das entsprechende Benutzerkonto 32 zu ermitteln.

Nachdem die Verbindung aufgebaut worden ist, erwartet die Vermittlungsanlage 10 sogleich die Übertragung des einzulösenden Bonuscodes 36 in Form einer Folge von DTMF-Signaltönen. Diese Übertragung erfolgt in Schritt 64. Um die Verbindungszeit möglichst gering zu halten, soll der Benutzer den einzulösenden Bonuscode 36 schon vor dem Verbindungsaufbau an dem Benutzertelefon 38 eingeben. Hierzu gibt der Benutzer zunächst die erste Rufnummer 46 ein, betätigt dann eine gerätespezifische Pausetaste des Benutzertelefons 38, und gibt schließlich den Bonuscode 36 ein. Erst nachdem dies geschehen ist, betätigt der Benutzer die zum Verbindungsaufbau vorgesehene Taste des Benutzertelefons 38. Das Benutzertelefon 38 wartet dann nach dem Senden der ersten Rufnummer 46 an das Telefonnetz 16 eine vorbestimmte Zeit, z.B. eine Sekunde, um den Verbindungsaufbau zu ermöglichen. Nach Ablauf dieser Wartezeit sendet das Benutzertelefon 38 in schneller Folge die dem Bonuscode 36 entsprechenden DTMF-Signaltöne.

Die gerade geschilderte Vorgehensweise benötigt erheblich weniger Verbindungszeit als eine manuelle Eingabe des Bonuscodes 36 durch den Benutzer bei laufender Verbindung. Dies ist wichtig, weil der Anruf der für den Benutzer kostenlosen ersten Rufnummer 46 insbesondere dann erhebliche Kosten für den Betreiber verursacht, wenn der Benutzer ein Mobiltelefon als Benutzertelefon 38 verwendet. Falls gewünscht, kann eine rasche Bonuscodeübermittlung auf die oben beschriebene Weise erzwungen werden, indem die Vermittlungsanlage 10 eine bei der ersten Rufnummer 46 eingehende Verbindung nach kurzer Zeit - z.B. nach fünf Sekunden - oder bei spürbaren Pausen zwischen den Ziffern des Bonuscodes 36 trennt. Auf jeden Fall beendet die Vermittlungsanlage 10 die Verbindung nach der vollständigen Übertragung des Bonuscodes 36, also nach Abschluß von Schritt 64.

In Schritt 66 wird der übermittelte Bonuscode 36 auf seine Gültigkeit überprüft. Voraussetzungen für einen gültigen Bonuscode 36 sind erstens, daß der Bonuscode 36 die durch den Erzeugungsalgorithmus vorgegebenen Eigenschaften aufweist, und zweitens, daß der Bonuscode 36 noch nicht eingelöst worden ist. Im vorliegenden Ausführungsbeispiel, bei dem alle gültigen und noch nicht eingelösten Bonuscodes 36 in der Bonuscode-Datenbank 22 enthalten sind, können diese beiden Bedingungen durch eine einzige Abfrage der Bonuscode-Datenbank 22 überprüft werden. In Ausführungsalternativen kann dagegen vorgesehen sein, in Schritt 66 zunächst zu bestimmen, ob es sich nicht um einen gefälschten Bonuscode 36 handelt, und erst dann durch eine Abfrage der Bonuscode-Datenbank 22 zu überprüfen, ob der Bonuscode 36 noch nicht eingelöst wurde. Überdies können in manchen Ausgestaltungen Verfallstermine für die ausgegebenen Bonuscodes 36 vorgesehen sein. In diesem Fall wird in Schritt 66 ferner überprüft, ob der Verfallstermin für den angegebenen Bonuscode 36 noch nicht überschritten wurde.

Wird in Schritt 66 ein ungültiger Bonuscode 36 festgestellt - also z.B. ein Bonuscode 36, der nie ausgegeben wurde oder der bereits eingelöst wurde -, so wird der Verfahrensablauf abgebrochen. Der fehlgeschlagene Einlöseversuch wird im Benutzerdatensatz 24 vermerkt. Um einen Mißbrauch des Systems zu vermeiden, kann vorgesehen sein, den Benutzer nach einem oder mehreren fehlgeschlagenen Einlöseversuchen für eine gewisse Zeit oder andauernd von der Benutzung des Systems auszuschließen.

Wurde in Schritt 66 ein gültiger Bonuscode 36 festgestellt, so wird dieser in Schritt 68 entwertet. Dies heißt, daß der Bonuscode 36 in der Bonuscode-Datenbank 22 als eingelöst gekennzeichnet wird. Hierzu kann z.B. der Eintrag des Bonuscodes 36 in der Bonuscode-Datenbank 22 entfernt oder mit einem entsprechenden Vermerk versehen werden.

Im Anschluß an die Entwertung des Bonuscodes 36 wird in Schritt 70 der Kontostand 34 des Benutzerkontos 32 entsprechend erhöht. Der Aufladevorgang des Benutzerkontos 32 ist damit erfolgreich abgeschlossen. Die Anzahl von Bonuspunkten, um die der Kontostand 34 erhöht wird, ist im vorliegenden Ausführungsbeispiel in geeignet verschlüsselter Form im Bonuscode 36 angegeben. In Ausführungsalternativen kann dagegen vorgesehen sein, daß die Bonuscode-Datenbank 22 für jeden darin gespeicherten Bonuscode 36 auch eine Angabe zur "Wertigkeit" dieses Bonuscodes enthält. Im vorliegenden Ausführungsbeispiel werden Bonuspunkte als "Währung" verwendet; der Kontostand 34 des Benutzerkontos kann jedoch auch unmittelbar in Telefonminuten oder einer anderen Einheit angegeben werden.

In Fig. 3 ist ein beispielhafter Ablauf dargestellt, bei dem ein Benutzer Telekommunikationsleistungen des hier beschriebenen Systems in Anspruch nimmt. Als Telekommunikationsleistungen dienen im vorliegenden Ausführungsbeispiel kostenlose Telefonminuten. Die Inanspruchnahme anderer Leistungen, z.B. von SMS- oder MMS-Diensten oder von Inhalten, erfolgt auf entsprechende Weise.

Der Ablauf gemäß Fig. 3 beginnt in Schritt 80 wieder mit einem Rufaufbau, der aber hier zur zweiten Rufnummer 48 erfolgt. Anhand der unterschiedlichen Rufnummern 46, 48 kann die Vermittlungsanlage 10 die unterschiedlichen vom Benutzer gewünschten Funktionen ohne weitere Nachfrage bestimmen. Im Zusammenhang mit dem Rufaufbau in Schritt 80 wird der Vermittlungsanlage 10, wie bereits oben beschrieben, die Anrufernummer 28 übermittelt. Aufgrund dieser Anrufernummer 28 wird dem Anruf in Schritt 82 das entsprechende Benutzerkonto 32 zugeordnet.

Im hier beschriebenen Ausführungsbeispiel erhält der Benutzer in Schritt 84 eine Ansage des aktuellen Kontostands 34. Auf diese Ansage kann jedoch in Ausführungsalternativen verzichtet werden, wenn die Verbindungszeiten so kurz wie möglich gehalten werden sollen. Wenn das Benutzerkonto 32 einen Kontostand 34 aufweist, der höher als ein vorgegebener Mindestwert ist, wird in Schritt 86 die Wahl der vom Benutzer gewünschten Telefonnummer 50 freigegeben, und der Benutzer erhält einen entsprechenden Wählton. Im vorliegenden Ausführungsbeispiel sind bei einem Kontostand von Null Bonuspunkten keine Telefonate mehr möglich; in Ausführungsalternativen kann dagegen eine gewisse "Überziehung" des Benutzerkontos 32 zulässig sein.

In Reaktion auf den Wählton gibt der Benutzer in Schritt 88 die von ihm oder ihr gewünschte Telefonnummer 50 in das Benutzertelefon 38 ein. Die Telefonnummer 50 wird in Form von DTMF-Signaltönen an die Vermittlungsanlage 10 gesendet. Die Vermittlungsanlage 10 baut daraufhin in Schritt 90 die Verbindung mit der vom Benutzer gewünschten Telefonnummer 50 auf.

Solange die Verbindung mit der Telefonnummer 50 besteht, wird in Schritt 90 das Benutzerkonto 32 in regelmäßigen Abständen - z.B. zu Anfang jeder Verbindungsminute - belastet. Die Zeitdauer zwischen den Belastungsvorgängen und/oder die Höhe jeder einzelnen Belastung können von der Art des Benutzertelefons 38 und/oder von der gerufenen Telefonnummer 50 abhängen. Beispielsweise kann vorgesehen sein, daß ein Anruf zu einer Telefonnummer 50 eines Mobiltelefons erheblich mehr Bonuspunkte "kostet" als ein Anruf zu einer Festnetznummer. Auch Auslandstelefonate können erheblich "teurer" als Inlandstelefonate sein. Bei Ausgestaltungen, die für den Benutzer kostenlose Einwahlnummern 46, 48 zur Verfügung stellen, kann das Benutzerkonto 32 außerdem stärker belastet werden, wenn der Benutzer ein Mobiltelefon - und nicht ein Festnetztelefon - als Benutzertelefon 38 benutzt.

Wenn während des Telefonats in Schritt 90 das Bonusguthaben auf dem Benutzerkonto 32 zur Neige geht, erhält der Benutzer eine Warnung. Das Telefonat mit der gewünschten Telefonnummer 50 wird unterbrochen, sobald der Kontostand 34 Null Bonuspunkte erreicht.

Im hier beschriebenen Ausführungsbeispiel ist ferner eine weitere Einwahlnummer der Vermittlungsanlage 10 vorgesehen, über die die Benutzer ein Sprachmenüsystem erreichen. Mittels dieses Sprachmenüsystems kann der Benutzer z.B. seinen oder ihren aktuellen Kontostand 34 abfragen. Auch das Aufladen des Benutzerkontos - ähnlich wie in Fig. 2 - und das Inanspruchnehmen von Telekommunikationsleistungen - ähnlich wie in Fig. 3 - sind über diese weitere Einwahlnummer möglich. Weil die Benutzung des Sprachmenüsystems jedoch im allgemeinen längere Verbindungszeiten bedingt, kann vorgesehen sein, die dritte Einwahlnummer für Anrufe von Mobiltelefonen entweder gar nicht oder zumindest nicht kostenlos zur Verfügung zu stellen.

## Patentansprüche

1. Verfahren zum Bereitstellen von Telekommunikationsleistungen, bei dem:
- eine Mehrzahl von Benutzerkonten (32) in einer Datenbank (20) geführt werden,
- zum Aufladen eines Benutzerkontos (32)
-- ein bei einer ersten vorbestimmten Rufnummer (46) eingehender Telefonanruf entgegengenommen wird,
-- ein zugeordnetes Benutzerkonto (32) durch Auswertung einer in Zusammenhang mit dem Rufaufbau übermittelten Kennzeichnung identifiziert wird,
-- ein durch den Anruf übermittelter Bonuscode (36) ausgewertet wird und,
-- wenn es sich um einen gültigen Bonuscode (36) handelt, der Stand der Benutzerkontos (32) entsprechend erhöht wird, und
- zur Inanspruchnahme der Telekommunikationsleistungen
-- ein bei einer zweiten vorbestimmten Rufnummer (48) eingehender Telefonanruf entgegengenommen wird,
-- ein zugeordnetes Benutzerkonto (32) durch Auswertung einer in Zusammenhang mit dem Rufaufbau übermittelten Kennzeichnung identifiziert wird und,
-- falls das Benutzerkonto (32) mindestens einen vorbestimmten Kontostand (34) aufweist, der Benutzer Gelegenheit zur Inanspruchnahme der Telekommunikationsleistungen erhält, wobei das Benutzerkonto (32) entsprechend belastet wird.

2. Verfahren nach Anspruch 1,
**dadurch gekennzeichnet, daß** sich die zweite vorbestimmte Rufnummer (48) von der ersten vorbestimmten Rufnummer (46) unterscheidet.

3. Verfahren nach Anspruch 1 oder Anspruch 2,
**dadurch gekennzeichnet, daß** die in Zusammenhang mit dem Rufaufbau übermittelte Kennzeichnung die Rufnummer (28) oder ein anderer Identifikator des Anrufers oder ein Identifikator des anrufenden Endgeräts (38) ist.

4. Verfahren nach einem der Ansprüche 1 bis 3,
**dadurch gekennzeichnet, daß** die Telekommunikationsleistungen das Durchführen von Telefonaten und/oder das Versenden von Nachrichten und/oder das Empfangen von Inhalten umfassen.

5. Verfahren nach einem der Ansprüche 1 bis 4,
**dadurch gekennzeichnet, daß** das anrufende Endgerät (38) den Bonuscode (36) unmittelbar oder mit einer vorbestimmten Pause nach der ersten vorbestimmten Rufnummer (46) sendet.

6. Verfahren nach einem der Ansprüche 1 bis 5,
**dadurch gekennzeichnet, daß** beim Aufladen des Benutzerkontos (32) unmittelbar nach dem Aufbau der Telefonverbindung die Übermittlung des Bonuscodes (36) erwartet wird.

7. Verfahren nach einem der Ansprüche 1 bis 6,
**dadurch gekennzeichnet, daß** zur Auswertung des mit dem Anruf bei der ersten vorbestimmten Rufnummer (46) übermittelten Bonuscodes (36) durch eine Datenbankabfrage überprüft wird, ob der jeweilige Bonuscode (36) noch nicht benutzt wurde.

8. Verfahren nach einem der Ansprüche 1 bis 7,
**dadurch gekennzeichnet, daß** bei der Inanspruchnahme der Telekommunikationsleistungen nach dem Aufbau der Telefonverbindung zur zweiten vorbestimmten Rufnummer (48) unmittelbar oder nach einer Ansage ein Wählton bereitgestellt wird.

9. Vorrichtung zum Bereitstellen von Telekommunikationsleistungen, mit einer Vermittlungsanlage (10) und/oder einem Datenbankverwaltungssystem (12), wobei die Vorrichtung dazu eingerichtet ist, ein Verfahren nach einem der Ansprüche 1 bis 8 auszuführen.

10. Computerprogrammprodukt mit Programmbefehlen, die dazu eingerichtet sind, einen oder mehrere Prozessoren einer programmierbaren Vermittlungsanlage (10) und/oder eines Datenbankverwaltungssystems (12) zu veranlassen, ein Verfahren nach einem der Ansprüche 1 bis 8 auszuführen.
